# EUROPÄISCHE PATENTSCHRIFT

(11) **EP 1 258 219 B1**
(45) Veröffentlichungstag und Bekanntmachung des Hinweises auf die Patenterteilung: **08.03.2006**
(21) Anmeldenummer: 02009641.8
(22) Anmeldetag: 27.04.2002
(51) Int. Cl.: A47J 47/14, A47J 36/10

(54) **Speisentransportbehälter**
Transport container for food
Conteneur de transport pour aliments

(30) Priorität: 15.05.2001 DE 10124568
(43) Veröffentlichungstag der Anmeldung: 20.11.2002
(73) Patentinhaber: Rieber GmbH & Co. KG, 72770 Reutlingen (DE)
(72) Erfinder: Grözinger, Peter, 72762 Reutlingen (DE)
(74) Vertreter: Patentanwälte Ruff, Wilhelm, Beier, Dauster & Partner

(56) Entgegenhaltungen:
- EP-A- 0 552 353
- CH-A- 649 054
- US-A- 1 765 072
- US-A- 3 273 747

## Beschreibung

Die Erfindung betrifft einen Speisentransportbehälter mit einer Behälterwanne und einem die Behälterwanne verschließenden Deckel sowie mit Behältergriffen, die beweglich an der Behälterwanne angeordnet sind, wobei die Behältergriffe als Verschlussmittel gestaltet sind, die in einer Verschlussposition den Deckel auf den oberen Rand der Behälterwanne gedrückt halten.

Aus der amerikanischen Patentschrift US 2,741,398 ist ein verschließbarer Behälter bekannt, bei dem an einer zylindrischen Seitenwand zwei gegenüberliegende Griffe schwenkbeweglich angeordnet sind. Die Griffe sind als Verschlussmittel gestaltet und können in einer nach oben geklappten, parallel zur Seitenwand verlaufenden Verschlussposition mit einem oberen, einwärts gebogenen Abschnitt über einen Behälterrand greifen. Der einwärts gebogene Abschnitt ist so gestaltet, dass er über einen Deckelrand schnappen kann und diesen dadurch auf den oberen Rand des Behälters gedrückt hält.

Aus der deutschen Patentschrift DE 42 15 251 C2 ist ein Speisentransportbehälter mit sogenannten Fallgriffen bekannt. Hierbei ist ein oberer Rand einer Behälterwanne mit Aussparungen versehen, in die ein bügelförmiger Griff eingesetzt werden kann. Das einzusetzende Ende des bügelförmigen Griffs weist eine Abbiegung auf, so dass der Griff durch eine Schwenkbewegung eingesetzt bzw. aus den Aussparungen entnommen werden kann. Wird der Griff parallel zur Seitenwand des Behälters nach oben gezogen, greifen die abgebogenen Enden hinter die Aussparungen, so dass der Behälter mit den Griffen angehoben werden kann. Auf diese Weise sind die Behältergriffe leicht abnehmbar, beispielsweise für den Transport oder die Reinigung des Speisentransportbehälters.

Ein weiterer Speisentransportbehälter ist aus einem Prospekt "Rieber NORMSET Gastronormbehälter aus CN 18/10 nach EN 631", 1999, der Anmelderin bekannt. Ein solcher Speisentransportbehälter besteht aus Edelstahl und weist eine Behälterwanne auf, die durch einen Edelstahldeckel verschließbar ist. Der Edelstahldeckel ist auf einen oberen Rand der Behälterwanne aufsetzbar. Auf gegenüberliegenden Seiten ist der obere Rand mit Griffen versehen, die in entsprechenden Aussparungen des oberen Randes gehalten sind. Die Griffe sind zwischen einer hochgezogenen Griffposition und einer nach unten abgesenkten Ruheposition in den Aussparungen beweglich und unverlierbar gehalten. Die Griffe sind derart am Behälterrand angeordnet und versenkbar gestaltet, dass mehrere Behälterwannen ineinander gestapelt werden können. Die Deckel gewährleisten keinen dichten Abschluß der Behälterwannen.

Es ist auch bekannt (DE 299 11 101 U1), einen Speisentransportbehälter mit einem wasserdichten Verschluss zu versehen. Bei einem solchen Speisentransportbehälter ist der Deckel mit einer zusätzlichen elastischen Dichtung versehen, die die entsprechende Dichtheit gewährleistet.

Weiterhin ist aus der schweizer Patentschrift CH 649 054 A5 ein Speisentransportbehälter mit einer Behälterwanne, einem die Behälterwanne verschließenden Deckel sowie Behältergriffen bekannt, die beweglich an der Behälterwanne angeordnet, durch entsprechende Aussparungen des oberen Behälterrandes gehalten und als besonders flache Fallgriffe ausgeführt sind. Die Fallgriffe sind in eine Ruheposition überführbar, in der sie im wesentlichen bündig mit der Behälteroberseite bündig abschließen.

Aus dem US-Patent US 1 765 072 A ist ein Dampfkochtopf mit einem Topfunterteil, einem Deckel, mit dem das Topfunterteil verschließbar ist, sowie Topfgriffen, die beweglich und als Verschlussmittel, die den Deckel in einer Verschlussposition an das Topfunterteil drücken, an dem Topfunterteil angeordnet sind

Aufgabe der Erfindung ist es, einen Speisentransportbehälter der eingangs genannten Art zu schaffen, der mit einfachen Mitteln eine zumindest weitgehende Wasserdichtheit im Deckelbereich ermöglicht.

Erfindungsgemäß ist hierzu ein Speisentransportbehälter gemäß dem Oberbegriff von Anspruch 1 vorgesehen, bei dem die Behältergriffe als in entsprechenden Aussparungen des oberen Randes gehaltene, in eine mit der Behälteroberseite im wesentlichen bündig abschließende Ruheposition überführbare Fallgriffe gestaltet sind, die an der Behälterwanne zieh- und schwenkbeweglich gelagert sind.

Durch die erfindungsgemäße Lösung weisen die Behältergriffe eine Doppelfunktion auf, indem sie zum einen das Tragen des Behälters oder der Behälterwanne ermöglichen und zum anderen in ihrer Verschlussposition den Deckel auf den Rand der Behälterwanne pressen. Hierdurch wird, zumal die Deckel relativ passgenau zu den Rändern der Behälterwanne gestaltet sind, eine relativ hohe Dichtheit erzielt, die eine weitgehende Wasserdichtheit gewährleistet. Zudem wird verhindert, dass die Deckel von dem Behälterrand abgehoben werden können. Durch den erfindungsgemäßen Speisentransportbehälter ist somit gefahrlos auch der Transport von Flüssigkeiten, wie Suppen oder Soßen, gewährleistet, ohne dass ein Auslaufen dieser Flüssigkeiten befürchtet werden muss.

Die Behältergriffe weisen die grundsätzlich aus dem Stand der Technik bereits bekannte Fallfunktion auf, mit der die Behältergriffe derart absenkbar sind, dass eine einwandfreie Stapelung mehrerer Behälterwannen ineinander wie auch eine Stapelung mehrerer Speisentransportbehälter übereinander ermöglicht ist.

In weiterer Ausgestaltung der Erfindung ist jeder Behältergriff an der Behälterwanne sowohl linear als auch schwenkbeweglich gelagert. Jeder Behältergriff ist insbesondere im wesentlichen vertikal, d.h. rechtwinklig zum Behälterrand ausziehbar oder relativ zu diesem absenkbar sowie wenigstens für die Überführung in die Verschlussposition zum Deckel hin verschwenkbar.

In Ausgestaltung der Erfindung sind die Fallgriffe in der Verschlussposition kraft- oder formschlüssig gehalten. Die Behältergriffe klemmen somit den Deckel entweder auf den Behälterrand fest oder sie verriegeln ihn relativ zum Behälterrand.

In weiterer Ausgestaltung der Erfindung ist am Deckel eine Raststelle für die Arretierung des Behältergriffes in seiner Verschlussposition vorgesehen. Als Raststelle ist insbesondere eine Rastnase oder ein anders gestalteter Rastvorsprung vorgesehen, der vorzugsweise einstückiger Bestandteil des Deckels ist.

In weiterer Ausgestaltung der Erfindung ist jeder Fallgriff bügelförmig gestaltet, wobei die Bügelschenkel derart voneinander beabstandet sind, dass zwischen dem Bügelschenkel vier Finger einer genormten Hand einer Bedienperson hindurchgreifen können. Vorzugsweise ist jeder Fallgriff somit nach DIN-Norm für vier Finger geeignet. Beim Stand der Technik sind die Fallgriffe schmäler und somit maximal für drei Finger einer DIN-Hand geeignet. Durch die erfindungsgemäße Ausgestaltung ist ein ergonomisch günstigeres Ergreifen des Speisentransportbehälters erzielbar.

In weiterer Ausgestaltung der Erfindung ist ein die Bügelschenkel miteinander verbindender Griffsteg mit einer Ummantelung versehen. Die Ummantelung ist vorzugsweise aus Kunststoff oder einem anderen, griffigen und physiologisch unbedenklichen Material gestaltet. Vorzugsweise ist das Material mit einer sehr geringen Wärmespeicher- oder Wärmeleitfähigkeit versehen, um während des Betriebs dauerhaft einen kühlen Griff zu gewährleisten. Durch die Ummantelung wird die Griffdicke erhöht, wodurch eine weiter verbesserte Ergonomie der Behältergriffe erzielt wird, die ein ergonomisch günstiges Ergreifen der Behältergriffe gewährleistet. Die Ummantelung kann eine in gewissen Grenzen vorhandene elastische Nachgiebigkeit aufweisen. Hierdurch wird eine Verrastung und Sicherung der Behäftergriffe in der Verschlussposition unterstützt.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Draufsicht eine Ausführungsform eines erfindungsgemäßen Speisentransportbehälters,
- Fig. 2: in perspektivischer Darstellung einen Längsschnitt durch einen Teil des Speisentransportbehälters nach Fig. 1, wobei ein Behältergriff sich in seiner Verschlussposition befindet,
- Fig. 3: die Darstellung nach Fig. 2, wobei der Behältergriff sich in seiner Ruheposition befindet,
- Fig. 4 bis 7: die längsgeschnittene, perspektivische Darstellung des Speisentransportbehälters nach den Fig. 1 bis 3, wobei der Behältergriff in verschiedenen End- und Zwischenpositionen dargestellt ist,
- Fig. 8: schematisch eine Schnittdarstellung eines Teiles des Speisentransportbehälters im Bereich des Behältergriffes, wobei sich dieser in seiner Verschlussposition befindet und
- Fig. 9: eine Draufsicht auf einen Teil des Speisentransportbehälters ähnlich Fig. 1.

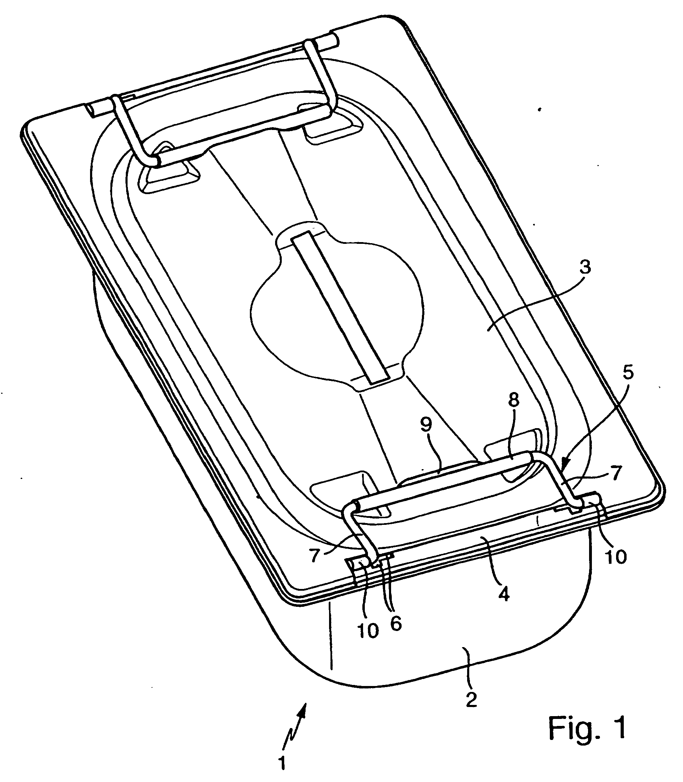

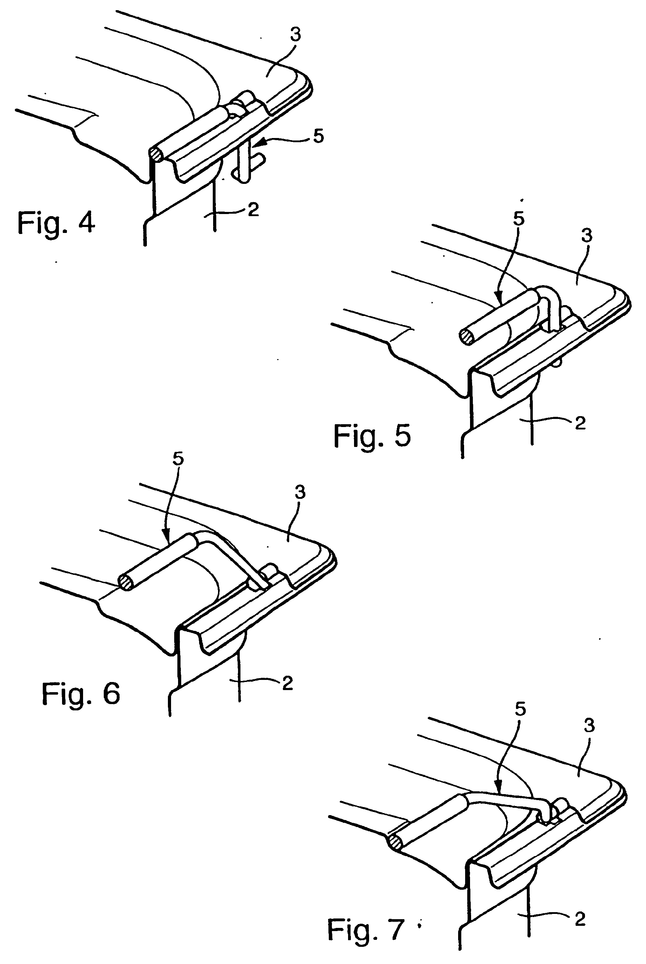

Ein Speisentransportbehälter 1 nach den Fig. 1 bis 9 weist eine Behälterwanne 2 sowie einen Deckel 3 auf, die beide aus Edelstahl hergestellt sind. Die Behälterwanne 2 ist mit einem umlaufenden oberen Rand 4 versehen, der von der Behälterwandung rechtwinklig und damit in normaler Funktionsposition der Behälterwanne horizontal nach außen abragt. Die Behälterwanne 2 ist in grundsätzlich bekannter Weise durch Tiefziehen oder einen anderen, geeigneten Umformvorgang hergestellt. Der Deckel 3 weist einen nicht näher gezeigten Deckelrand auf, der den Rand 4 der Behälterwanne 2 im wesentlichen flächig anliegend umschließt, wie anhand der zeichnerischen Darstellungen erkennbar ist. Im Bereich gegenüberliegender Schmalseiten des rechteckig umlaufenden Randes 4 ist der Deckel 3 im Bereich von zwei Behältergriffen 5 ausgespart, wie anhand der Fig. 1 bis 9 erkennbar ist. Im Bereich der Aussparungen des Deckelrandes - auf die aufgesetzte Schließposition des Deckels 3 bezogen - ist am oberen Rand 4 der Behälterwanne 2 jeweils ein Behältergriff 5 gehalten, der jeweils als Fallgriff gestaltet ist. Jeder Fallgriff 5 ist bügelförmig ausgeführt, wobei er einen Griffsteg 8 sowie zwei gegenüberliegende Bügelschenkel 7 aufweist. Die Bügelschenkel 7 gehen an ihren freien Enden in zur Lagerung oder Stützung dienende Fortsätze 11, 12 über, auf die nachfolgend noch näher eingegangen werden wird.

Für jeden Behältergriff 5 ist im oberen Rand 4 der Behälterwanne 2 ein Paar von Aussparungen 6 vorgesehen, wobei jede Aussparung 6 für jeweils einen Bügelschenkel 7 vorgesehen ist. Im Bereich jeder Aussparung 6 ist zudem eine ösen- oder hülsenartige Ausformung nach oben vorgesehen, die einstückig zu dem Rand 4 der Behälterwanne 2 ist. Diese Ausformungen sind durch Ausprägungen nach oben gebildet und stellen Lagerhülsen für die seitlich nach außen ragenden Lagerfortsätze 12 der Bügelschenkel 7 dar. Die Ausprägungen 10 sind nach unten offen, so dass der Lagerfortsatz 12 jedes Bügelschenkels 7 lediglich in seiner Bewegung nach oben begrenzt ist. Nach unten hingegen kann er frei abgesenkt werden, bis der Griffsteg 8 auf dem Rand 4 zur Anlage kommt. Die Aussparungen 6 sind derart gestaltet, dass der Behältergriff 5 auf jeder Seite in einer zum Rand 4 etwa rechtwinklig, d.h. vertikal, ausgerichteten Position so weit nach unten abgesenkt werden kann, bis der Griffsteg 8 auf der Oberseite des Randes 4 zur Anlage kommt. Jeder Behältergriff 5 kann somit Zieh- oder Schubbewegungen in vertikaler Richtung durchführen, sowie zumindest in der oberen Endposition, in der die Lagerfortsätze 12 in hülsen- oder pfannenförmigen Ausprägungen 10 anliegen, verschwenkt werden.

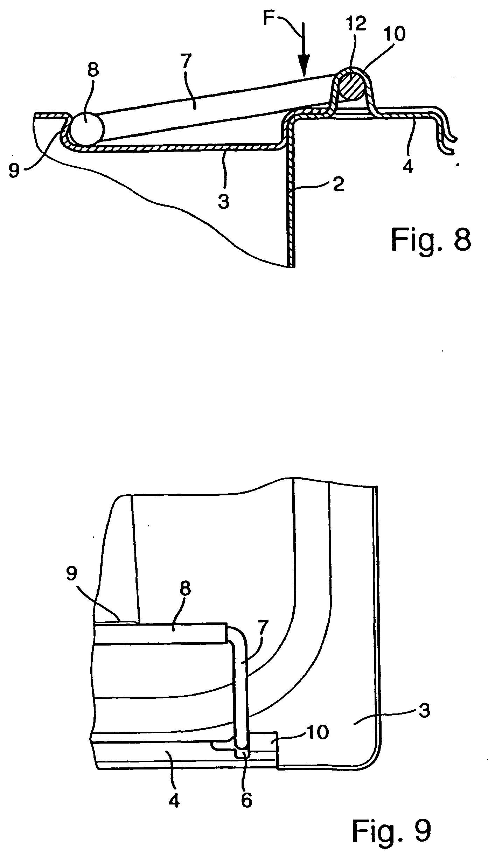

Durch die Fortsätze 11 an den Bügelschenkeln 7, die sowohl rechtwinklig zum jeweiligen Bügelschenkel 7 als auch rechtwinklig zu dem jeweiligen Lagerfortsatz 12 ausgerichtet sind, wird insbesondere verhindert, dass die Behältergriffe nach außen verschwenkbar sind. Die Fortsätze 11 dienen somit als Stützfortsätze, die ein Nachaußenschwenken jedes Behältergriffes 5 zumindest weitgehend verhindern. Der Stützfortsatz 11 dient zudem dazu, beim Verspannen des Behältergriffes 5 in seiner Verschlussposition keine zu starke Biegung des Behältergriffes zu erzielen. Entgegen der schematisierten Fig. 8 dargestellten Ausführung kann somit jeder Bügelschenkel 7 in seiner Verschlussposition noch eine etwas höhere Neigung vollziehen, wodurch die Kraft- und Hebelverhältnisse für die Presskraft auf die Oberseite des Deckelrandes verbessert werden.

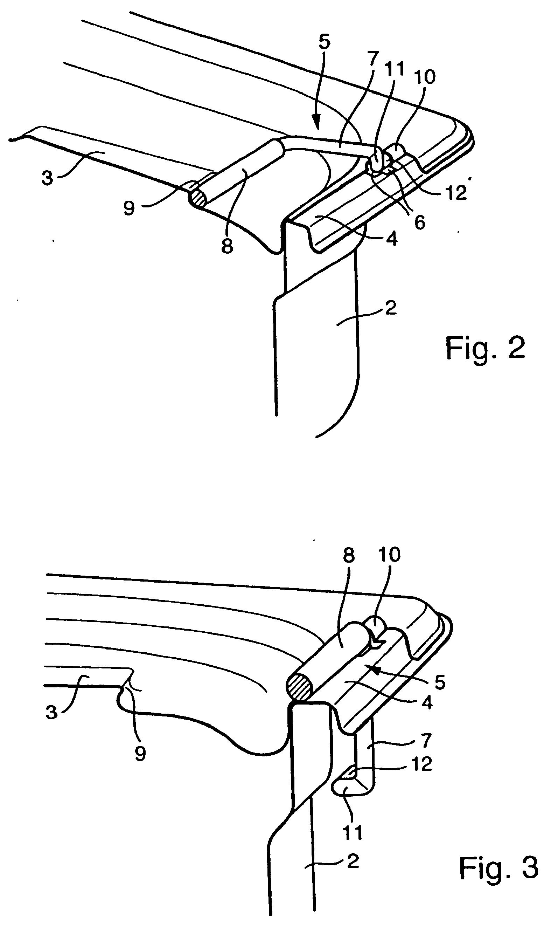

In der oberen Endposition, in der die Lagerfortsätze 12 in den Ausprägungen 10 anliegen, kann jeder Behältergriff 5 somit um wenigstens 90° zum Deckel 3 hin nach innen verschwenkt werden. Wie anhand der Fig. 2, 7 und 8 erkennbar ist, ist der Behältergriff 5 in seiner nach innen verschwenkten Endposition sogar um mehr als 90° relativ zur Vertikalen nach innen und nach unten verschwenkt. Kurz vor Erreichen seiner Endposition, in der der Griffsteg 8 in einer entsprechenden Mulde des Deckels 3 zur Anlage kommt, drückt jeder Bügelschenkel 7 auf die Oberseite des Deckelrandes in Pfeilrichtung F, wie anhand Fig. 8 erkennbar ist. Hierdurch wird das Nachuntenpressen des Deckels 3 auf den Rand 4 der Behälterwanne 2 erzielt. Dies gewährleistet den zumindest weitgehend wasserdichten Verschluss im Bereich der umlaufenden Ränder des Deckels 3 und der Behälterwanne 2. Diese Verschlussposition wird gesichert durch die am Deckel 3 im Bereich der Aufnahmemulde vorgesehene Raststelle 9, die beim dargestellten Ausführungsbeispiel als Rastnase gestaltet ist. Die Rastnase 9 ist einstückig aus dem Deckel 3 ausgeformt, wie anhand der Zeichnungen erkennbar ist. Die Rastnase 9 ist derart ausgebildet, dass der Griffsteg 8 durch Druckkraft bei Erreichen der Rastnase 9 nach unten gedrückt werden muss, bis er hinter der Rastnase 9 einrastet (Fig. 8). Jeder Behältergriff 5 ist aus Metall, vorzugsweise einem Rundstahlprofil, einstückig gebogen. Der Griffsteg 8 ist durch eine Ummantelung, vorzugsweise aus Kunststoff oder Holz, dieses Rundstahlprofils gebildet. Der Abstand der Bügelschenkel 7 zueinander ist so bemessen, dass die Länge des Griffsteges 8 ausreichend groß ist, um durch vier Finger einer gemäß DIN-Norm dimensionierten Hand ergriffen werden zu können. Die Ummantelung des Griffsteges 8 weist gegenüber der Edelstahloberfläche der Bügelschenkel 7 verbesserte haptische Eigenschaften auf.

Die durch die miteinander fluchtenden, halbkreisförmigen Ausprägungen 10 und die entsprechend angepassten zylindrischen Lagerfortsätze 12 definierte Schwenkachse für jeden Behältergriff 5 ist derart auf die Lage der Oberseite des Deckelrandes - unmittelbar zur jeweiligen Ausprägung 10 nach innen benachbart - sowie auf die Position der Rastnase 9 und die Dicke des Rundprofils des Behältergriffes 5 abgestimmt, das bei aufgesetztem Deckel 3 und kraftlos nach innen gelegten Behältergriff der Griffsteg 8 oberhalb der Rastnase 9 positioniert ist. Beim Nachuntendrücken des Behältergriffes 8 drücken die Bügelschenkel 7 auf die Oberseite des Deckelrandes und drücken diesen nach unten auf den Rand 4 der Behälterwanne 2 (Pfeilrichtung F in Fig. 8). Der Behältergriff 5 befindet sich somit in seiner hinter der Rastnase 9 verrasteten Verschlussposition in einer gespannten, geringfügig elastisch verformten Position. Die Rastkraft ist derart bemessen, dass sie von Hand ohne größeren Kraftaufwand wieder gelöst werden kann.

Um eine sichere Stapelbarkeit mehrerer Speisentransportbehälter 1 übereinander zu gewährleisten, können die Bügelschenkel derart gekrümmt gestaltet sein, dass ein Boden eines oberen Speisentransportbehälters umlaufend bündig auf der Deckeloberseite des unteren Speisentransportbehälters aufliegt. Vorzugsweise sind die Behältergriffe und insbesondere die Bügelschenkel somit in entsprechenden Aufnahmemulden oder -abschnitten in ihrer Verschlussposition eingebettet, so dass die nicht über die Deckeloberfläche abragen.

## Patentansprüche

1. Speisentransportbehälter mit einer Behälterwanne und einem die Behälterwanne verschließenden Deckel sowie mit Behältergriffen, die beweglich an der Behälterwanne angeordnet sind, wobei die Behältergriffe (5) als Verschlussmittel gestaltet sind, die in einer Verschlussposition den Deckel (3) auf den oberen Rand (4) der Behälterwanne (2) gedrückt halten, **dadurch gekennzeichnet, dass** die Behältergriffe (3) als in entsprechenden Aussparungen (6) des oberen Randes (4) gehaltene, in eine mit der Behälteroberseite im wesentlichen bündig abschließende Ruheposition überführbare Fallgriff gestaltet sind und an der Behälterwanne (2) sowohl ziehals auch schwenkbeweglich gelagert sind.

2. Speisentransportbehälter nach Anspruch 1, **dadurch gekennzeichnet, dass** die Behältergriffe (5) in der Verschlussposition kraft- oder formschlüssig gehalten sind.

3. Speisentransportbehälter nach Anspruch 1 oder 2, **dadurch gekennzeichnet, dass** am Deckel (3) eine Raststelle (9) für die Arretierung jedes Behältergriffes (5) in seiner Verschlussposition vorgesehen ist.

4. Speisentransportbehälter nach einem der vorhergehenden Ansprüche, **dadurch gekennzeichnet, dass** jeder Behältergriff (5) bügelförmig gestaltet ist, wobei die Bügelschenkel (7) derart voneinander beabstandet sind, dass zwischen den Bügelschenkeln (7) vier Finger einer genormten Hand einer Bedienperson hindurchgreifen können.

5. Speisentransportbehälter nach Anspruch 4, **dadurch gekennzeichnet, dass** ein die Bügelschenkel (7) miteinander verbindender Griffsteg (8) mit einer Ummantelung versehen ist.

## Claims

1. Food transport container having a container vessel and a cover which closes the container vessel, and having container handles which are movably arranged on the container vessel, the container handles (5) being constructed as closure means which retain the cover (3) in a closure position in a state pressed on the upper edge (4) of the container vessel (2), **characterised in that** the container handles (3) are constructed as drop handles which are retained in corresponding recesses (6) of the upper edge (4) and which can be moved into a rest position which terminates substantially in alignment with the upper side of the container, and are arranged on the container vessel (2) so as to be movable both in terms of pulling and pivoting.

2. Food transport container according to claim 1, **characterised in that** the container handles (5) are retained in a non-positive or positive-locking manner in the closure position.

3. Food transport container according to claim 1 or 2, **characterised in that** a locking location (9) for arresting each container handle (5) in the closure position thereof is provided on the cover (3).

4. Food transport container according to any one of the preceding claims, **characterised in that** each container handle (5) is constructed as a curved member, the legs (7) of the curved member being spaced apart from each other in such a manner that four fingers of a standard hand of an operator can extend between the legs (7) of the curved member.

5. Food transport container according to claim 4, **characterised in that** a gripping web (8) which connects the legs (7) of the curved member to each other is provided with a coating.

## Revendications

1. Conteneur de transport d'aliments comprenant une cuve de conteneur et un couvercle fermant la cuve du conteneur et des poignées du conteneur, qui sont disposées de façon mobile sur la cuve de conteneur, les poignées du conteneur (5) étant conçues comme des moyens de fermeture qui maintiennent dans une position de fermeture le couvercle (3) appuyé sur le bord (4) supérieur de la cuve de conteneur (2), **caractérisé en ce que** les poignées du conteneur (3) sont conçues sous la forme de poignée tombante maintenue dans des évidements (6) appropriés du bord (4) supérieur et pouvant être transférées dans une position de repos se terminant sensiblement au même niveau que le côté supérieur du conteneur et sont logées sur la cuve du conteneur (2) aussi bien de façon mobile en traction que de façon mobile en pivotement.

2. Conteneur de transport d'aliments selon la revendication 1, **caractérisé en ce que** les poignées du conteneur (5) sont maintenues par adhérence ou complémentarité de forme dans la position de fermeture.

3. Conteneur de transport d'aliments selon la revendication 1 ou 2, **caractérisé en ce qu'**une position d'encliquetage (9) est prévue sur le couvercle (3) pour l'arrêt de chaque poignée du conteneur (5) dans sa position de fermeture.

4. Conteneur de transport d'aliments selon l'une quelconque des revendications précédentes, **caractérisé en ce que** chaque poignée du conteneur (5) est conçue en forme de bride, les branches de bride (7) étant espacées les unes des autres de telle sorte que quatre doigts d'une main normalisée d'un utilisateur peuvent passer entre les branches de bride (7).

5. Conteneur de transport d'aliments selon la revendication 4, **caractérisé en qu'**une barre de maintien (8) reliant entre elles les branches de bride (7) est dotée d'un revêtement.
